# FASCICULE DE BREVET EUROPEEN

(11) **EP 0 642 456 B1**
(45) Date de publication et mention de la délivrance du brevet: **23.10.1996**
(21) Numéro de dépôt: 94909966.7
(22) Date de dépôt: 15.03.1994
(51) Int. Cl.: B65D 90/44, B64D 37/32

(54) **DISPOSITIF D'INERTAGE D'UN STOCKEUR**
VORRICHTUNG ZUR ERZEUGUNG EINER INERTEN ATMOSPHÄRE INNERHALB EINES LAGERTANKS
DEVICE FOR INERTING A STORAGE TANK

(30) Priorité: 30.03.1993 FR 9303658
(43) Date de publication de la demande: 15.03.1995
(73) Titulaire: ELF ATOCHEM S.A., 92091 Paris Cédex 42 (FR)
(72) Inventeur: RESSEGUIER, Sylvio, F-60879 Rieux (FR)
(86) Numéro de dépôt international: FR9400279
(87) Numéro de publication internationale: WO9422744

(56) Documents cités:
- DE-B- 1 269 053
- US-A- 1 849 932
- US-A- 2 732 095
- US-A- 2 889 955

## Description

La présente invention a pour objet un dispositif pour l'inertage d'un stockeur, à partir d'un réservoir de gaz inerte sous pression, qui présente une conduite de prise de pression et une conduite d'inertage destinées à être reliées au stockeur, et une conduite d'admission de gaz inerte destinée à être reliée au réservoir de gaz inerte. L'invention se rapporte plus particulièrement à un dispositif pour inertage basse pression.

L'inertage d'un stockeur consiste à remplacer l'air présent dans le stockeur par un gaz inerte. L'inertage est en particulier employé pour le stockage des produits inflammables, pour le stockage des produits qui se dégradent au contact de l'oxygène de l'air, ou encore pour des réactions sous atmosphère inerte. Pour assurer l'inertage d'un stockeur, on peut employer diverses méthodes et, par exemple, une méthode de pressurisation-dépressurisation, ou de balayage par le gaz inerte choisi. Ces méthodes permettent d'abaisser progressivement la concentration en oxygène dans le stockeur.

On appelle "pression d'inertage" la pression du gaz inerte dans le stockeur. Généralement, cette pression est légèrement supérieure à la pression ambiante, de sorte que des fuites entre le stockeur et l'atmosphère ambiante ne conduisent pas à une diminution de la qualité de l'inertage.

Le problème que l'invention se propose de résoudre est celui du maintien de la pression d'inertage. En effet, au cours de l'utilisation du stockeur et une fois que l'on a assuré un inertage (par exemple par pressurisation-dépressurisation), de multiples facteurs tendent à faire diminuer la pression d'inertage. Des prélèvements du produit conservé dans le stockeur font diminuer la pression d'inertage. Des variations de température des parois du stockeur peuvent avoir le même effet. Il est donc nécessaire de maintenir la pression d'inertage à sa valeur nominale.

Il existe des systèmes permettant de remplir cette fonction. Ces systèmes sont généralement des systèmes dédiés, d'une assez grande complexité, difficilement déplaçables et d'un entretien onéreux. Ils présentent généralement un réglage de la pression de l'enceinte à inerter, ce qui implique une dérive du point de réglage, difficile à contrôler. Ces systèmes ne sont pas toujours efficaces pour des pressions très basses, et ont souvent un comportement aléatoire dans les plages de pression inférieure à 10 mb. Ils ne permettent pas un réglage du débit maximum d'inertage, et requièrent une pression d'alimentation importante.

La présente invention permet de pallier les inconvénients de ces systèmes. Dans le dispositif d'inertage selon l'invention, la pression de l'enceinte à inerter est fixée par construction, ce qui évite toute dérive. Le dispositif reste efficace pour de très basses pressions, avec une bonne précision. Il présente un débit maximum d'inertage variable, et facilement réglable. Enfin, il fonctionne même avec des pressions d'alimentation très basses. L'invention propose un système fiable, qui assure un inertage rapide et qui est susceptible d'être facilement réglé pour s'adapter à différents stockeurs ou différentes pressions. Le dispositif d'inertage selon l'invention est constitué d'éléments simples et disponibles dans le commerce, ce qui permet un entretien rapide et limite son coût.

La présente invention a pour objet un dispositif pour l'inertage d'un stockeur à partir d'un réservoir de gaz inerte sous pression, qui présente une conduite de prise de pression et une conduite d'inertage destinées à être reliées au stockeur, et une conduite d'admission de gaz inerte destinée à être reliée au réservoir de gaz inerte. Selon l'invention, le dispositif comprend une vanne pilote, présentant une entrée de commande, une sortie et deux entrées susceptibles de communiquer alternativement avec ladite sortie, en fonction de la pression à ladite entrée de commande, et une vanne d'alimentation présentant une entrée de commande, une entrée et une sortie susceptibles d'être reliées ou non en fonction de la pression à ladite entrée de commande; l'entrée de commande de ladite vanne pilote est reliée à la conduite de prise de pression; les entrées de ladite vanne pilote sont reliées d'une part à la conduite d'admission et d'autre part à une pression de référence cette pression étant différente de celle dans la conduite d'admission; la sortie de ladite vanne pilote est reliée par une conduite à l'entrée de commande de ladite vanne d'alimentation; la sortie de ladite vanne d'alimentation est reliée à la conduite d'inertage; et l'entrée de ladite vanne d'alimentation est reliée à la conduite d'admission de gaz inerte.

Selon un mode de réalisation de la présente invention, la vanne pilote et la vanne d'alimentation sont constituées de vannes à tiroir.

Avantageusement, le dispositif présente en amont de la vanne d'alimentation une vanne de réglage du débit d'inertage.

En outre, le dispositif comporte une conduite d'alimentation basse pression, reliant la conduite d'admission de gaz inerte à la vanne pilote par l'intermédiaire d'un filtre et d'un détendeur.

D'autres avantages de la présente invention apparaîtront à la lecture de la description suivante, donnée à titre d'exemple et en référence aux figures, qui montrent:
- figure 1 un schéma de principe du dispositif selon l'invention;
- figure 2 un schéma plus détaillé d'un mode de réalisation du dispositif selon l'invention;
- figure 3 un schéma d'un dispositif selon l'invention et du stockeur sur lequel il est monté.

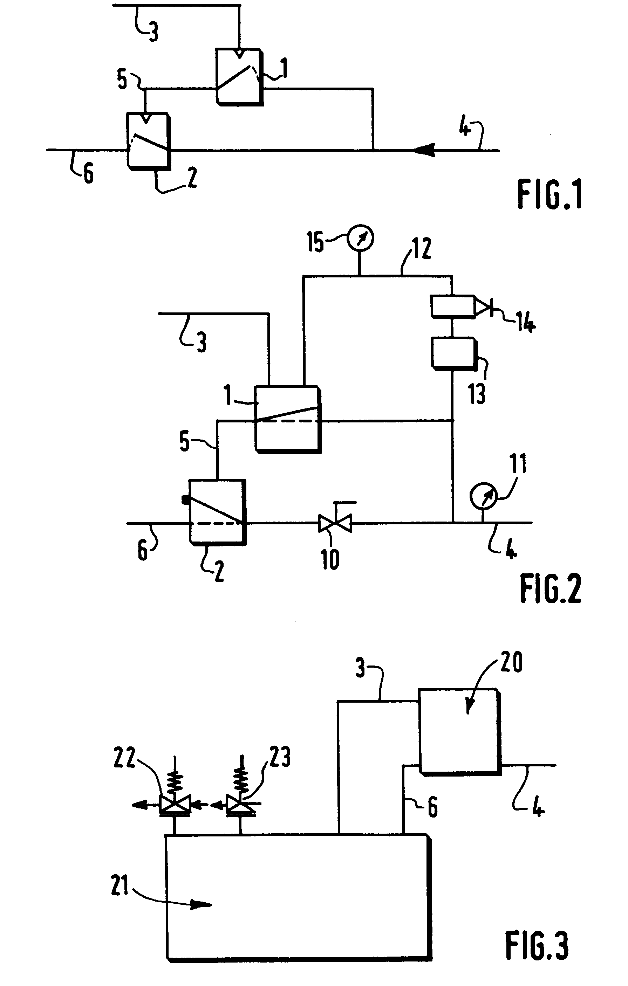

La figure 1 montre un schéma de principe d'un dispositif d'inertage selon la présente invention. Le dispositif comprend une vanne pilote 1 et une vanne d'alimentation 2 à action rapide. La vanne pilote 1 présente une entrée de commande, une sortie et deux entrées susceptibles de communiquer alternativement avec ladite sortie, en fonction de la pression à l'entrée de commande. La vanne d'alimentation 2 présente une entrée de commande, une entrée et une sortie susceptibles d'être reliées ou non en fonction de la pression à ladite entrée de commande. Le dispositif présente une conduite 3 de prise de pression sur le stockeur, qui est reliée à l'entrée de commande de la vanne pilote 1. L'entrée de la vanne pilote est reliée à la conduite d'admission 4 de gaz inerte, qui est elle-même reliée à un réservoir de gaz inerte sous pression. La sortie de la vanne pilote est reliée par une conduite 5 à l'entrée de commande de la vanne d'alimentation 2. Avantageusement, la vanne pilote 1 est une vanne dans laquelle la sortie est reliée soit à l'entrée de la conduite 4 (vanne ouverte), soit à une pression de référence (vanne fermée). Cette pression de référence peut simplement être la pression atmosphérique. La position de la vanne pilote 1 est fonction de la pression à l'entrée de commande. L'entrée de la vanne d'alimentation est reliée à la conduite d'admission 4 de gaz inerte. La sortie de la vanne d'alimentation 2 est reliée au stockeur par une conduite d'inertage 6. Si l'on choisit pour la vanne d'alimentation 2 une vanne à tiroir, l'entrée reliée à la conduite d'admission 4 est soit en communication avec la conduite 6 allant vers le stockeur (vanne ouverte), soit en communication avec une sortie bouchée (vanne fermée). La position de la vanne d'alimentation est une fonction de la pression à son entrée de commande, et donc de la pression dans la conduite 5.

Le fonctionnement du dispositif de la figure 1 est le suivant. Lorsque la pression d'inertage dans le stockeur descend en dessous d'une première valeur de consigne, la pression dans la conduite 3 qui relie le stockeur à l'entrée de commande de la vanne pilote 1 diminue en conséquence, et la vanne pilote passe en position ouverte, c'est-à-dire que l'entrée reliée à la conduite d'admission 4 en gaz inerte est en communication avec la sortie de la vanne pilote. La pression dans la conduite 5 est alors égale à la pression d'alimentation en gaz inerte dans la conduite 4. De ce fait, la vanne d'alimentation 2 passe en position ouverte, c'est-à-dire que son entrée reliée à la conduite d'admission 4 est en communication avec sa sortie reliée au stockeur par la conduite d'inertage 6. Le gaz inerte provenant de la conduite d'admission 4 s'écoule alors dans le stockeur par la conduite d'inertage 6.

La pression dans le stockeur remonte alors. Lorsque la pression dans la conduite de prise de pression 3 dépasse une deuxième valeur de consigne, supérieure à la première valeur de consigne, la vanne pilote 1 passe en position fermée, et en conséquence la conduite 5 n'est plus en communication avec la conduite d'admission en gaz inerte mais avec l'atmosphère. De ce fait, la pression au niveau de l'entrée de commande de la vanne d'alimentation 2 diminue et la vanne d'alimentation 2 passe en position fermée, coupant ainsi le flux de gaz inerte vers le stockeur.

Le dispositif de la figure 1 permet ainsi d'assurer le maintien de la pression d'inertage dans le stockeur.

La figure 2 montre un schéma plus détaillé d'un mode de réalisation du dispositif d'inertage selon l'invention. Les éléments déjà décrits en référence à la figure 1 portent les mêmes numéros. Le dispositif de la figure 2 comprend, sur la conduite 4 d'admission de gaz inerte, immédiatement en amont de l'entrée de la vanne d'alimentation 2, une vanne 10 de réglage du débit, qui permet un réglage manuel du débit maximum du courant d'inertage vers le stockeur. Avantageusement, la conduite d'admission 4 présente, au branchement sur les moyens de stockage en gaz inerte, un manomètre haute pression 11, permettant de surveiller la pression dans la conduite 4. En parallèle avec les entrées des vannes pilote 1 et d'alimentation 2, une conduite 12 d'alimentation basse pression de la vanne pilote est branchée sur la conduite 4. Cette conduite 12 présente un filtre 13, un détendeur 14 et un manomètre basse pression 15 et est ensuite reliée à une entrée de la vanne pilote 1. Dans le mode de réalisation de la figure 2, la vanne pilote est une vanne comprenant un pilote pneumatique avec amplificateur, qui nécessite une alimentation en gaz comprimé basse pression. Cette alimentation est fournie par la conduite 12 d'alimentation basse pression. Le manomètre basse pression 15 permet la surveillance de la pression à l'entrée d'alimentation de la vanne à pilote pneumatique 1. L'alimentation de la vanne pilote par la conduite 12 d'alimentation basse pression permet en outre d'assurer une purge permanente à faible débit dans la conduite 3 de prise de pression. De la sorte, on évite tout bouchage de la conduite 3.

Dans le mode de réalisation de la figure 2, on peut avantageusement utiliser pour la vanne pilote 1 un pilote pneumatique avec amplificateur, couplé à un module d'adaptation, tels que par exemple ceux commercialisés par la société FESTO. Le choix d'un tel type de vanne assure d'une part un fonctionnement sous une pression minimum d'alimentation en gaz inerte de l'ordre de 2 b; d'autre part, elle permet d'obtenir une précision de l'ordre de 0,5 mb, et assure un inertage correct même dans la plage de pression de 0,5 à 1 mb.

La vanne d'alimentation à action rapide 2 est choisie en fonction du débit d'inertage souhaité, étant entendu que la valeur maximale du débit d'inertage peut être réglée par action sur la vanne manuelle 9 de réglage du débit. La vanne d'alimentation 2 à action rapide est par exemple constituée d'une vanne commercialisée par la société Jouvel et Cordier ou encore d'une vanne du type Minimatic de la société Klein. Le choix de la vanne d'alimentation 2 permet de fixer le débit maximum d'inertage, en fonction de la vanne employée. Ce débit peut ainsi atteindre 1700 Nm³/h, pour une vanne de diamètre nominal 1 1/4", sous une pression d'alimentation de 7 b.

La figure 3 montre un schéma d'un dispositif selon l'invention et d'un stockeur sur lequel il est monté. Le dispositif 20 selon l'invention est reliée au stockeur 21 par les conduites 3 de prise de pression et 6 d'admission en gaz inerte. Avantageusement, les conduites 3 et 6 débouchent dans la partie supérieure du stockeur et sont séparées de plus d'un mètre afin d'assurer une pressurisation uniforme du stockeur. Le dispositif 20 est aussi relié à un réservoir de gaz inerte sous pression, par la conduite d'admission en gaz inerte 4. Le stockeur 21 présente, par ailleurs, une soupape double effet 22, assurant sa protection mécanique, et une soupape d'évacuation 23, permettant l'évacuation du gaz en surpression. La soupape 23 est réglée de façon à ne s'ouvrir que lorsque la pression dans le stockeur 21 est supérieure à la pression d'inertage assurée par le dispositif 20 selon l'invention, et plus précisément, la soupape 23 ne s'ouvre que pour une pression supérieure à la deuxième valeur de consigne mentionnée plus haut. La soupape double effet 22 est réglée de façon analogue.

Bien entendu, la présente invention n'est pas limitée aux modes de réalisation décrits et représentés mais elle est susceptible de nombreuses variantes accessibles à l'homme de l'art sans que l'on ne s'écarte de l'esprit de l'invention.

## Revendications

1. Dispositif pour l'inertage d'un stockeur (21), à partir d'un réservoir de gaz inerte sous pression, ledit dispositif présentant une conduite (3) de prise de pression et une conduite (6) d'inertage destinées à être reliées au stockeur, et une conduite (4) d'admission de gaz inerte destinée à être reliée au réservoir de gaz inerte, caractérisé en ce qu'il comprend une vanne pilote (1), présentant une entrée de commande, une sortie et deux entrées susceptibles de communiquer alternativement avec ladite sortie, en fonction de la pression à ladite entrée de commande, et une vanne d'alimentation (2) présentant une entrée de commande, une entrée et une sortie susceptibles d'être reliées ou non en fonction de la pression à ladite entrée de commande,
l'entrée de commande de ladite vanne pilote (1) étant reliée à la conduite (3) de prise de pression,
les entrées de ladite vanne ilote (1) étant reliées d'une part à la conduite (4) d'admission et d'autre part à une pression de référence cette pression étant différente de celle dans la conduite d'admission (4),
la sortie de ladite vanne pilote (1) étant reliée par une conduite (5) à l'entrée de commande de ladite vanne d'alimentation (2),
la sortie de ladite vanne d'alimentation (2) étant reliée à la conduite d'inertage (6),
et l'entrée de ladite vanne d'alimentation étant reliée à la conduite (4) d'admission de gaz inerte.

2. Dispositif selon la revendication 1, caractérisé en ce que la vanne pilote (1), et la vanne d'alimentation (2) sont constituées de vannes à tiroir.

3. Dispositif selon la revendication 1 ou 2, caractérisé en ce qu'il présente en amont de la vanne d'alimentation (2) une vanne de réglage du débit d'inertage.

4. Dispositif selon l'une des revendications 1 à 3, caractérisé en ce qu'il comporte une conduite d'alimentation basse pression (12), reliant la conduite (4) d'admission de gaz inerte à la vanne pilote (1) par l'intermédiaire d'un filtre (13) et d'un détendeur (14).

## Patentansprüche

1. Vorrichtung für die Inertisierung eines Speichers (21) mit Inertgas aus einem Druckbehälter, wobei die besagte Vorrichtung eine Leitung (3) zur Druckaufnahme und eine Leitung (6) zur Inertisierung umfaßt, die mit dem Speicher verbunden sind, und eine Zufuhrleitung (4) für Inertgas, die mit dem Inertgasbehälter verbunden ist, dadurch gekennzeichnet, daß sie ein Steuerventil (1) mit einem Steuereingang, einem Ausgang und zwei Eingängen für die wechselweise Kommunikation mit dem besagten Ausgang in Abhängigkeit von dem Druck an dem besagten Steuereingang, und ein Versorgungsventil (2) mit einem Steuereingang, einem Eingang und einem Ausgang, die in Abhängigkeit von dem Druck an dem besagten Steuereingang unterbrochen oder verbunden werden können, umfaßt,
wobei der Steuereingang des besagten Steuerventils (1) mit der Leitung (3) zur Druckaufnahme verbunden ist,
die Eingänge des besagten Steuerventils (1) einerseits mit der Zufuhrleitung (4) und andererseits mit einem Referenzdruck verbunden sind, wobei dieser Druck sich von dem in der Zufuhrleitung (4) unterscheidet,
der Ausgang des besagten Steuerventils (1) über eine Leitung (5) mit dem Steuereingang des besagten Versorgungsventils (2) verbunden ist,
der Ausgang des besagten Versorgungsventils (2) mit der besagten Leitung für die Inertisierung (6) verbunden ist,
und der Eingang des besagten Versorgungsventils mit der Zufuhrleitung (4) für Inertgas verbunden ist.

2. Vorrichtung nach Anspruch 1, dadurch gekennzeichnet, daß das Steuerventil (1) und das Versorgungsventil (2) Absperrschieber sind.

3. Vorrichtung nach Anspruch 1 oder 2, dadurch gekennzeichnet, daß sie oberhalb des Versorgungsventils (2) ein Durchflußregelventil für die Inertisierung umfaßt.

4. Vorrichtung nach einem der Ansprüche 1 bis 3, dadurch gekennzeichnet, daß sie eine Niederdruckversorgungsleitung (12) umfaßt, die mit der Zufuhrleitung (4) für das Inertgas beim Steuerventil (1) über einen Filter (13) und einen Druckminderer (14) verbunden ist.

## Claims

1. Device for the inert-rendering of a storage container (21), using a cylinder of pressurized inert gas, the said device having a pressurizing pipe (3) and an inert-rendering pipe (6) which are intended to be connected to the storage container, and an inert-gas intake pipe (4) intended to be connected to the cylinder of inert gas, characterized in that it comprises a pilot valve (1), having one control inlet, one outlet and two inlets which are capable of communicating alternately with the said outlet, depending on the pressure at the said control inlet, and a supply valve (2) having one control inlet, one inlet and one outlet which are capable of being connected or not connected, depending on the pressure at the said control inlet,
the control inlet of the said pilot valve (1) being connected to the pressurizing pipe (3),
the inlets of the said pilot valve (1) being connected, on the one hand, to the intake pipe (4) and, on the other hand, to a reference pressure, this pressure being different from that in the intake pipe (4),
the outlet of the said pilot valve (1) being connected via a pipe (5) to the control inlet of the said supply valve (2),
the outlet of the said supply valve (2) being connected to the inert-rendering pipe (6),
and the inlet of the said supply valve being connected to the inert-gas intake pipe (4).

2. Device according to Claim 1, characterized in that the pilot valve (1) and the supply valve (2) are constituted by slide valves.

3. Device according to Claim 1 or 2, characterized in that it has, upstream of the supply valve (2), a valve for adjusting the inert-rendering flow rate.

4. Device according to one of Claims 1 to 3, characterized in that it includes a low-pressure supply pipe (12) connecting the inert-gas intake pipe (4) to the pilot valve (1) via a filter (13) and via a pressure-reducing valve (14).
